# EUROPEAN PATENT SPECIFICATION

(11) **EP 3 129 166 B1**
(45) Date of publication and mention of the grant of the patent: **27.04.2022**
(21) Application number: 15717374.1
(22) Date of filing: 07.04.2015
(51) Int. Cl.: B08B 9/08, B32B 38/10, C09D 175/04, C08L 75/04, C08L 75/14, C09J 7/50, C08K 5/42

(54) **COMPOSITIONS FOR REMOVABLE LABELS**
ZUSAMMENSETZUNG FÜR ABNEHMBARE ETIKETTS
COMPOSITIONS POUR ÉTIQUETTES AMOVIBLES

(30) Priority: 07.04.2014 US 201461975986 P
(43) Date of publication of application: 15.02.2017
(73) Proprietor: Avery Dennison Corporation, Glendale, CA 91203 (US)
(72) Inventor: WIEGERS, Ronald, NL-5237 NA s-Hertogenbosch (NL); VAN NOORT, Jos, NL-2332 AT Leiden (NL)
(74) Representative: Müller-Boré & Partner Patentanwälte PartG mbB
(86) International application number: PCT/US2015/024601
(87) International publication number: WO 2015/157203

(56) References cited:
- EP-A1- 0 798 323
- EP-A1- 1 240 264
- EP-A2- 0 794 204
- WO-A1-00/62273
- DE-A1- 4 003 106

## Description

The present disclosure relates to compositions for use with removable labels for articles, and particularly for reusable containers. The present subject matter also relates to removable labels including the compositions, articles or containers with the labels, and methods of applying and/or removing the labels.

The present invention relates to a primer composition, a label comprising the primer composition, a labeled container comprising the label, a method of applying the label to a container and a method of removing a label from the labeled container.

Reusable containers typically include one or more labels adhered to their outer surface. The labels may include colors, designs, logos, and information concerning the product and frequently, details as to the contents of the container.

After purchase and/or use of the product, a reusable container is subjected to one or more operations which enable the container to be reused. This practice is increasing in popularity in view of environmental issues associated with disposal of used containers. Labels used in conjunction with reusable containers are often designed to be easily removed from a container upon being subjected to washing and typically caustic washing. After label removal, the containers can be reused or recycled as is known in the art.

A problem frequently encountered during washing of labeled containers is adhesive residue on the container. That is, although labels can generally be removed from containers, the outer surface of the container often retains a portion of the adhesive used to adhere the label to the container. Adhesive residue can contaminate or interfere with subsequent container operations such as later washings, relabeling, or container recycling. Although artisans have attempted various approaches for eliminating such adhesive residue, a need remains for an effective and convenient strategy to eliminate or significantly reduce adhesive residue on previously labeled reusable containers or articles.

DE 40 03 106 A1 describes a carrier for a label which is removable with alkali, including a fixing layer which is obtained by applying a radiation-curable composition containing a radiation-curable resin and a radiation-curable carboxylic acid to the surface of the carrier and hardening the composition. WO 00/62273 A1 relates to a self-adhesive film label which is intended for use notably on reusable bottles and can easily be removed in standard washers. EP 0 794 204 A2 describes latent-crosslinking aqueous polyurethane dispersions, used as an adhesive with increased long-term storage capabilities. EP 0 798 323 A1 describes water-dilutable dispersions of cationically-modified and urethane-modified (meth)acrylic copolymers, particularly suitable for the production of base coats in multi-layer coatings, particularly in the coating of vehicles and vehicle parts. EP 1 240 264 A1 describes a waterborne primer with improved chip resistance.

The difficulties and drawbacks associated with previously known approaches are addressed in the present compositions, labels, labeled articles or containers, and related methods.

In one aspect, the present invention provides a primer composition for retaining adhesive disposed thereon during a caustic wash operation. The primer composition comprises at least one component selected from a polyurethane and a polyurethane acrylate, and at least one anionic surfactant as surface tension modifier. The polyurethane is an aliphatic polyurethane, the polyurethane acrylate is an aliphatic polyurethane acrylate or an aromatic polyurethane acrylate, and the primer composition is essentially free of any liquid vehicle component. The primer composition is in a layer form and an acrylic emulsion adhesive is disposed on the layer of the primer composition. Upon subjecting the primer composition and the adhesive to a caustic wash operation, at least substantially all of the adhesive remains disposed on the layer of the primer composition.

In another aspect, the present invention provides a label comprising at least one facestock layer. The facestock defines a first face and a second oppositely directed face. The label also comprises an adhesive layer. And, the label additionally comprises the primer layer according to the present invention disposed between the facestock layer and the adhesive layer. The primer layer is disposed immediately adjacent to and in contact with the adhesive layer.

In yet another aspect, the present invention also provides a labeled container comprising a container defining an outer surface, and the label according to the present invention adhered to the outer surface of the container, wherein the adhesive layer of the label is in contact with the outer surface of the container.

In still another aspect, the present invention provides a method of applying a label to a container. The method comprises providing a container defining an outer surface. The method also comprises providing the label according to the present invention. And, the method additionally comprises adhering the adhesive layer of the label to the outer surface of the container to thereby apply the label to the container.

And in yet a further aspect, the present invention provides a method of removing a label from a labeled container. The method comprises providing the labeled container according to the present invention. The method also comprises subjecting the labeled container to at least one washing operation thereby resulting in removal of the label from the container.

The drawings and description are to be regarded as illustrative and not restrictive.
Figure 1 is a schematic cross sectional view of a removable label in accordance with the present invention.
Figure 2 is a schematic cross sectional view illustrating label application to and/or removal from a container in accordance with the present invention.

The present subject matter provides compositions for use in removable labels that serve to anchor adhesives to the label, and which enable the label to be easily and completely removed from an underlying substrate such as by washing, while retaining the adhesive with the label. The compositions are also compatible with inks, pigments, and dyes typically used in removable labels. In the present invention, the compositions function as a primer and retain adhesive with the label such as during a container washing operation to remove the label. As a result of the unique adhesive anchoring properties of the compositions, the adhesive is retained entirely or at least substantially so, with the label rather than remaining with the washed container.

The compositions are initially in the form of an aqueous dispersion comprising (i) at least one of a polyurethane and a polyurethane acrylate, and (ii) at least one surface tension modifier. The polyurethane is an aliphatic polyurethane and the polyurethane acrylate is an aliphatic polyurethane acrylate or an aromatic polyurethane acrylate. And in particular embodiments, the aliphatic polyurethane is a waterborne aliphatic polyether polyurethane and/or the aliphatic polyurethane acrylate is a waterborne aliphatic urethane acrylate.

The present invention also provides removable labels that include the noted compositions. The labels comprise (i) one or more facestock layers, (ii) one or more optional layers or regions of ink, dyes, pigments, or like materials collectively referred to herein as "print," (iii) one or more layers or regions of the primer compositions noted herein, and (iv) one or more layers or regions of adhesive. The adhesive layer is disposed immediately adjacent to and in contact with the layer of the noted primer composition. And, typically the primer composition is disposed between the layer of print and the adhesive layer. In certain embodiments, the primer composition is disposed immediately adjacent to and in contact with the print. The label may optionally also comprise one or more liners or liner panels disposed on the adhesive layer, to protect and cover the adhesive until use.

The present invention also provides containers having the noted labels adhered thereto. Typically, the containers are glass and can be in the form of beverage bottles. However, as described herein, the present invention includes a wide array of container types and container materials.

The present invention also provides methods of using the noted primer compositions and labels including the primer compositions. For example, various methods of adhering labels to containers are provided. The adhered labels can be easily removed by subjecting the labeled container to one or more washing operations. As a result of incorporation of the primer composition in the label, the adhesive is retained with the label undergoing removal, rather than the adhesive remaining with the container. Various methods of removing labels from containers are also provided.

### Primer Compositions

The primer compositions of the present invention comprise at least one component selected from: (1) a polyurethane, and (2) a polyurethane acrylate. In particular embodiments, the primer compositions described herein are in the form of an aqueous dispersion comprising at least one of: (1) a polyurethane, and (2) a polyurethane acrylate. In particular, suitable primer compositions are composed of: (1) an aliphatic polyurethane, and (2) an aliphatic polyurethane acrylate.

Suitable polyurethanes for application in accordance with the present subject matter are selected from waterborne polyester-polyurethanes and waterborne polyether-polyurethanes. A polyester-polyurethane polymer is the reaction product of a predominantly aliphatic polyisocyanate component and a polyester polyol component. As used herein, the term "predominantly aliphatic" means that at least 70 weight percent of the polyisocyanate component is an aliphatic polyisocyanate, in which all of the isocyanate groups are directly bonded to aliphatic or cycloaliphatic groups, irrespective of whether aromatic groups are also present. According to the present invention, the amount of aliphatic polyisocyanate is 100 weight %, of the polyisocyanate component. Examples of suitable aliphatic polyisocyanates include ethylene diisocyanate, 1,6-hexamethylene diisocyanate, isophorone diisocyanate, cyclohexane-1,4-diisocyanate, 4,4'-dicyclohexylmethane diisocyanate, cyclopentylene diisocyanate, p-tetramethylxylene diisocyanate (p-TMXDI) and its meta isomer (m-TMXDI), hydrogenated 2,4-toluene diisocyanate, and 1-isocyanto-1-methyl-3(4)-isocyanatomethyl cyclohexane (IMCI). Mixtures of aliphatic polyisocyanates can also be used.

Polyester polyols that may be used in the polyester polyol component include hydroxyl-terminated reaction products of polyhydric alcohols such as ethylene glycol, propylene glycol, diethylene glycol, neopentyl glycol, 1,4-butanediol, 1,6-hexanediol, furan dimethanol, cyclohexane dimethanol, glycerol, trimethylolpropane or pentaerythritol, or mixtures thereof. Also included are polycarboxylic acids, especially dicarboxylic acids, and ester-forming derivatives thereof. Examples include succinic, glutaric and adipic acids or their methyl esters, phthalic anhydride and dimethyl terephthalate. Polyesters obtained by the polymerisation of lactones, for example caprolactone, in conjunction with a polyol may also be used. Commercially available polyester-polyurethanes useful in accordance with the present subject matter include those sold under the trade names AVALURE UR-425, AVALURE UR-430, AVALURE UR-405 and AVALURE UR-410 by Goodrich Corporation (Charlotte, N.C.), NEOREZ R600, NEOREZ R9679 and NEOREZ R-989 all by NeoResins (Waalwijk, The Netherlands).

A polyether-polyurethane polymer is the reaction product of a predominantly aliphatic polyisocyanate component and a polyether polyol component. Useful aliphatic polyisocyanates are described above. Suitable polyether polyols include products obtained by the polymerization of a cyclic oxide or by the addition of one or more such oxides to polyfunctional initiators. Such polymerized cyclic oxides include, for example, ethylene oxide, propylene oxide and tetrahydrofuran. Such polyfunctional initiators having oxides added include, for example, water, ethylene glycol, propylene glycol, diethylene glycol, cyclohexane dimethanol, glycerol, trimethylopropane, pentaerythritol and Bisphenols (such as A and F).

Suitable polyesters include polyoxypropylene diols and triols, poly (oxyethylene-oxypropylene) diols and triols obtained by the simultaneous or sequential addition of ethylene and propylene oxides to appropriate initiators and polytetramethylene ether glycols obtained by the polymerisation of tetrahydrofuran. Commercially available polyether-polyurethanes useful in accordance with the present subject matter include those sold under the trade names SANCURE 878, AVALURE UR-450 and SANCURE 861 by Goodrich Corporation (Charlotte, N.C.), NEOREZ R563 and NEOREZ R-551 by NeoResins (Waalwijk, The Netherlands).

In accordance with aspects of the present invention, aliphatic urethane acrylates or aromatic urethane acrylates are used. The functionality (amount of acrylic moieties per molecule) for urethane acrylates varies in practice between one and six. Generally, the lower the functionality, the lower the reactivity, the better the flexibility and the lower the viscosity. The compositions in accordance with the present subject matter typically have a functionality of two or three.

Monofunctional urethane acrylates are a specialty product, which are used to improve adhesion to difficult substrates and to improve flexibility. These products are very low in viscosity. High functionality urethane acrylates (functionality 4 or higher) are also specialty products that are used to improve reactivity, scratch resistance, chemical resistance, etc.

Four types of isocyanates can be used for urethane acrylate synthesis: monoisocyanates, aliphatic diisocyanates, aromatic diisocyanates and polymeric isocyanates. Isocyanates that are not monoisocyanates are also called polyisocyanates. Monoisocyanates are used for monofunctional urethane acrylates only, and this type of oligomer is described above. Diisocyanates are by far the most widely used in urethane acrylate synthesis. They are available in aliphatic and aromatic diisocynates. Aromatic diisocyanates are used for the manufacture of the so-called aromatic urethane acrylates. The incorporation of an aromatic diisocyanate makes the urethane acrylate harder. Aromatic urethane acrylates are also significantly lower cost than aliphatic urethane acrylate. This makes them interesting for those applications, where the performance of a urethane acrylate is desired (e.g. a good flexibility or abrasion resistance) but the formulation has to be relatively low cost. One drawback of aromatic urethane acrylates is that they tend to yellow and therefore they are less appropriate for long lasting applications on white or light colored substrates.

Aliphatic diisocyanates are used in aliphatic urethane acrylates. Aliphatic urethane acrylates are slightly more flexible than aromatic urethane acrylates with the same functionality, a similar polyol modifier and at similar molecular weight. An advantage of aliphatic urethane acrylates is the fact that they are virtually non-yellowing and therefore can be used for long lasting applications, on white or light colored substrates.

Polymeric isocyanates are used less for urethane acrylates than diisocyanates. They are essentially used for higher functionality (e.g., 3 and higher) urethane acrylates. Isocyanate-functional reactants are made from polyisocyanates reacted with a compound containing active hydrogen functionality with hydroxyl groups being typical, although mercaptan groups, amine groups, and carboxyl groups also can be used.

Polyisocyanates are conventional in nature and include, for example, hexamethylene diisocyanate, toluene diisocyanate (TDI), diphenylmethane diisocyanate (MDI), m- and p-phenylene diisocyanates, bitolylene diisocyanate, cyclohexane diisocyanate (CHDI), bis-(isocyanatomethyl) cyclohexane (H 6 XDI), dicyclohexylmethane diisocyanate (H 12 MDI), dimer acid diisocyanate (DDI), trimethyl hexamethylene diisocyanate, lysine diisocyanate and its methyl ester, isophorone diisocyanate, methyl cyclohexane diisocyanate, 1,5-napthalene diisocyanate, xylylene and xylene diisocyanate and methyl derivatives thereof, polymethylene polyphenyl isocyanates, chlorophenylene-2,4-diisocyanate, polyphenylene diisocyanates available commercially as, for example, Mondur MR or Mondur MRS, isophorone diisocyanate (IPDI), hydrogenated methylene diphenyl isocyanate (HMDI), tetramethyl xylene diisocyanate (TMXDI), hexamethylene diisocyanate (HDI), or oligomer materials of these materials such as a trimer of IPDI, HDI or a biuret of HDI, and the like and mixtures thereof.

In certain embodiments, the compositions of the present subject matter comprise aliphatic urethane acrylates that have a polyester or a polyether backbone.

Polyether urethane acrylates are typically more flexible than polyester urethane acrylates and often lower cost. In addition, a polyether urethane acrylate will have a slightly lower viscosity that a polyester urethane acrylate with the same functionality and approximately the same molecular weight.

Polyesters can be synthesized, for example, by reacting C1-C12 diacids (or their corresponding anhydrides) or other diacids with a diol or a mixture of diols. The mixture is heated in the presence of a catalyst to temperatures sufficient to remove the water formed in the condensation reaction.

Polyethers can be synthesized from ethylene oxide to have a molecular weight of, for example, about 1,000-6000 (Mn) by conventional techniques well known in the art. Polyether polyols (e.g., block polyethylene and polypropylene oxide homo- and co-polymers) optionally alkylated (e.g., polytetramethylene ether glycols) also can be used. Additionally, ethylene oxide and propylene oxide can be co-reacted to form the polyether polyol, or the polyether polyol can be built on a di-functional compound that contains groups reactive with ethylene oxide and propylene oxide. Such suitable groups include, for example, hydroxyl groups, thiol groups, acid groups, and amine groups. Accordingly, diols, triols, dithiols, diacids, diamines, and the like, are suitable di-functional compounds which can be reacted with ethylene oxide and/or propylene oxide for synthesizing the polyether in accordance with the present subject matter. Suitable such compounds include, for example, alkylene glycols, typically ranging from about 2 to 8 carbon atoms (including cycloalkylene glycols). Illustrative of such diols are ethylene glycol, 1,3-propanediol, 1,4-butanediol, 1,5-pentanediol, 1,6-hexanediol, 1,2-propanediol, 1,3-butanediol, 2,3-butanediol, 1,3-pentanediol, 1,2-hexanediol, 3-methyl pentane,1,5-diol, 1,4-cyclohexanedimethanol, and the like, and mixtures thereof. Diethylene glycol, dipropylene glycol, and the like additionally can be used as desirable or convenient.

A hydroxy (meth)acrylate monomer is included to functionalize the polyester-polyether urethane for later UV curing. Suitable hydroxy (meth)acrylates include, for example, hydroxyethyl (meth)acrylate, hydroxypropyl (meth)acrylate, hydroxybutyl (meth)acrylate, caprolactone acrylate and the like. Alternatively, other hydroxy functional monomers may be employed, for example, hydroxybutyl vinyl ether or allyl alcohol. In keeping with terminology in this field, the parenthetical group is optional. Thus, "(alkyl)acrylate" means "acrylate and alkylacrylate".

Typical commercially available examples of urethane acrylates that can be used in accordance the present subject matter are UCECOAT 7772, UCECOAT 7773, UCECOAT 7849, UCECOAT 7770 (all from Allnex or CYTEC Surface Specialties), Joncryl U6336 (BASF), BAYHYDROL UV 2317, BAYHYDROL UV VP LS 2348 (Bayer) and NEORAD R440 (DSM Neoresins Waalwijk).

A wide array of acrylic polymers could be used in the primer compositions. For example, NEOCRYL XK-90 from DSM NeoResins of The Netherlands could be used.

The primer compositions in accordance with the present subject matter may include a water dispersible crosslinker. Suitable water-dispersible polyfunctional chemically activatable crosslinking agents are commercially available. These crosslinking agents include dispersible formulations of polyfunctional aziridines, isocyanates, melamine resins, epoxies, oxazolines, carbodiimides and other polyfunctional crosslinkers. In one embodiment, the crosslinking agents are added at an amount in a range of from about 0.1 parts to about 30 parts based on 100 parts total solids. In one other embodiment, the crosslinking agents are added at an amount in a range of from about 1 part to about 20 parts based on 100 parts total solids. In another embodiment, the crosslinking agents are added at an amount in a range of from about 2 parts to about 15 parts based on 100 parts total solids. In still a further embodiment, the crosslinking agents are added at an amount greater than or equal to about 4 parts based on 100 parts total solids, and in yet a further embodiment, the crosslinking agents are added at an amount in a range of from about 4 parts to about 7 parts based on 100 parts total solids. Adding crosslinking agents to the polyurethane dispersion composition may form an interpenetrating or interconnected network having crosslinked matrixes which link the blended polymers with covalent and/or non-covalent linkages.

Other additives can be added as well to obtain a certain desired characteristic, such as waxes, defoamers, colorants, anti-oxidants, UV stabilizers, luminescents, cross-linkers, etc.

The primer compositions also comprise one or more anionic surfactant as surface tension modifier. In particular embodiments the surface tension modifier is dioctyl sodium sulfosuccinate. Dioctyl sodium sulfosuccinate is commercially available from a variety of sources including Cytec Industries under the designation AEROSOL^{®} OT-75 and from Sigma-Aldrich.

The one or more surface tension modifiers are incorporated in the primer composition at a concentration of from 0.01% to 5%, in many embodiments from 0.1% to 2%, and in particular embodiments from 0.1% to 1%. In certain embodiments, the noted OT-75 agent is used at a concentration in the primer composition of 0.133%.

The primer compositions described herein in general also comprise a liquid vehicle component, which is typically aqueous or which includes water and/or one or more alcohols or water-compatible vehicles. In many embodiments, the liquid vehicle is water or at least includes a majority proportion of water. A nonlimiting example of an alcohol for use or incorporation in the liquid vehicle is isopropyl alcohol (IPA). According to the present invention, the primer composition is in a layer form and is essentially free of any liquid vehicle component.

As previously noted, the primer compositions are initially in the form of an aqueous dispersion of the noted polyurethane component(s), and include the surface tension modifier(s) and any optional agents or other components. The primer compositions are prepared by known blending and material preparation techniques.

The primer compositions are applied in a liquid form and typically by known operations such as spraying, coating, printing, and the like. After deposition of the primer composition into a desired form, i.e., typically as a thin layer, the composition is then subjected to one or more operations to remove the liquid vehicle component and thereby produce a dried and/or cured layer of the primer composition. In this state the primer composition is essentially free of any liquid vehicle component. The liquid vehicle component can be removed by known operations such as heating or flash drying. Additional operations can also be performed upon the primer composition prior to, during, and/or after its deposition into a desired form such as for example crosslinking.

### Labels

As previously noted, the labels of the present subject matter include one or more layers or regions of the noted primer compositions, one or more facestock layers, one or more optional print layers, and one or more adhesive layers, and optionally a liner layer. The present subject matter may be utilized in labels free of print, but in many embodiments, the labels comprise one or more regions of print.

### Facestock

The facestock can be any flexible material commonly used as the facestock in tapes and labels. Nonlimiting examples include paper, such as high gloss, semi-gloss, and litho, each used in multi-color printing applications, and electronic data processing (EDP) paper, used in typewriter and ink jet printing applications; polyesters, such as polyethylene terephthalate (PET); polyolefins, such as polypropylene (PP), ethylene-propylene copolymers, polyethylene (PE); and other materials.

In many embodiments of the present subject matter, the facestock is transparent or substantially transparent to visible light. This characteristic is useful if the label includes print disposed along an inner face of the facestock. Thus, use of a transparent or optically clear facestock enables the print to be readily viewed or visually perceptible through the facestock and along an outer face of the facestock.

In certain applications, it may be useful to utilize "shrink" films or oriented films as a facestock layer. The present subject matter includes for example biaxially oriented films such as polyethylene terephthalate (PET) as a facestock layer.

### Print

As previously noted, the labels of the present subject matter may include one or more layers or regions of print. The term "print" as used herein refers to dyes, pigments, inks, or like materials. As will be understood, "dye" and like terms mean a visible light absorbing compound present in a molecularly dispersed or dissolved form. "Pigment" and like terms mean a visible light absorbing material or compound that is present in a non-molecularly dispersed or particulate form. "Ink" and like terms means a coatable or printable formulation containing a dye and/or pigment. Although the present subject matter is largely directed toward labels including visually perceptible print, it is contemplated that the labels may include print that is exclusively or primarily indicative under UV light or other conditions.

### Adhesive

In one embodiment, any adhesive composition that can be readily dissolved, dissociated, or caused to release from an underlying polymer, plastic, or surface can be utilized in conjunction with the present subject matter. In one embodiment, the adhesive utilized in conjunction with the present subject matter has sufficient adhesion at both cold and warm temperatures. As noted above, the adhesive composition utilized in conjunction with the present subject matter should possess compatibility with an underlying substrate of glass, polymer, or plastic, compound of the polymer, or plastic, container or article as well as with the backmost facing layer of the facestock and/or label that is to be applied to the polymer, or plastic, container or article.

In one embodiment, the adhesive selected for use in conjunction with the primer compositions of present subject matter leaves no residue on the glass or plastic surface that would require one or more further processing steps to remove such residue from the surface of the glass, polymer, or plastic, container or article prior to the recycling thereof.

In one embodiment, a suitable adhesive is selected from suitable tacky acrylic emulsion adhesive polymers that possess excellent adhesion to a wide variety of surfaces, including a wide range of polymer surfaces as well as non-polymer surfaces (e.g., stainless steel and corrugated board). Moreover, the emulsion adhesive polymers of this embodiment possess excellent cohesion and adhesion at low temperatures and, when part of a laminate stock such as pressure sensitive adhesive label stock, provide excellent high speed converting characteristics such as die cutting, matrix stripping and fan folding.

In one embodiment, additional suitable emulsion polymers for use as an adhesive in the present subject matter are disclosed in U.S. Pat. Nos. 5,164,444; 5,183,459; 5,189,126; 5,264,532; 5,278,227.

In another embodiment, a suitable adhesive for the present subject matter is a copolymer composition formed via an emulsion process from a mixture of reactants comprising at least one alkyl acrylate ester of an alcohol containing at least 4 carbon atoms in the alkyl chain, at least one polar monomer and at least one copolymerizable monomer selected from methyl acrylate, methyl methacrylate (MMA), ethyl acrylate (EA), vinyl acrylate (VAc), and combinations of two or more thereof, wherein the reaction includes a chain transfer agent.

In still another embodiment, the adhesive composition for use in conjunction with the present subject matter is an acrylic emulsion polymer system comprised of a copolymer of about 15 weight percent to about 35 weight percent of vinyl acetate, about 20 weight percent to about 40 weight percent of di-2-ethylhexyl maleate, about 35 weight percent to about 60 weight percent 2-ethylhexyl acrylate and about 1 weight percent to about 3 weight percent of one or more unsaturated carboxylic acids for each 100 parts by weight of polymer, and about 3 weight percent to about 20 weight percent of acidic rosin derivative provided as tackifier and about 1 weight percent to about 10 weight percent of a rosin-based surfactant (e.g., an ethoxylated rosin based surfactant) based on 100 parts of the adhesive composition. Such adhesive compositions are disclosed in U.S. Pat. No. 5,385,965.

In one embodiment of the present subject matter, the adhesive utilized herein contains a rosin-based additive that that is selected based on the rosin-based additive's ability to liquefy at the typical temperatures utilized in various caustic washing steps that are a part of various recycling processes. Suitable rosin-based additives for use in this embodiment include the various rosin-based additives detailed in U.S. Pat. No. 5,385,965.

Alternatively or additionally, the adhesive may contain a blend of anionic and ionic surfactants in the adhesive ranging between 4 weight percent and 7 weight percent based on 100 parts of adhesive composition. The blend of surfactants may be contain alkyl phenol ethoxylates, nonyl phenol ethoxylates, salts of ethenesulfonic acid, fatty alcohol ether sulfates, sulfosuccinates, and combinations thereof. Commercially available, non-limiting examples of such surfactants include Polystep B-27, from Stepan Company, Disponil FES 77 and Disponil FES 32, from BASF, and Hydropalat 875, from BASF.

### Liner

If a liner or release liner is included in the label, a wide array of materials and configurations can be used for the liner. In many embodiments, the liner is a paper or paper-based material. In many other embodiments, the liner is a polymeric film of one or more polymeric materials. Typically, at least one face of the liner is coated with a release material such as a silicone or silicone-based material. As will be appreciated, the release coated face of the liner is placed in contact with the otherwise exposed face of the adhesive layer. Prior to application of the label to a surface of interest, the liner is removed to thereby expose the adhesive face of the label.

The liner can be in the form of a single sheet. Alternatively, the liner can be in the form of multiple sections or panels.

### Containers

The containers or articles can be formed from glass, polymeric materials typically referred to as plastics, and/or other materials that can be subjected to one or more washing operations.

If the container is a plastic container, the container can be formed from any suitable polymer or mixture of polymers (e.g., a polyethylene terephthalate (PET), recycled polyethylene terephthalate (rPET), high density polyethylene (HDPE), polyvinyl chloride (PVC), poly lactic acid (PLA), cellulose, biopolymer films, low density polyethylene (LDPE), polypropylene (PP), polystyrene (PS), polyesters, or other types of polymers or plastics).

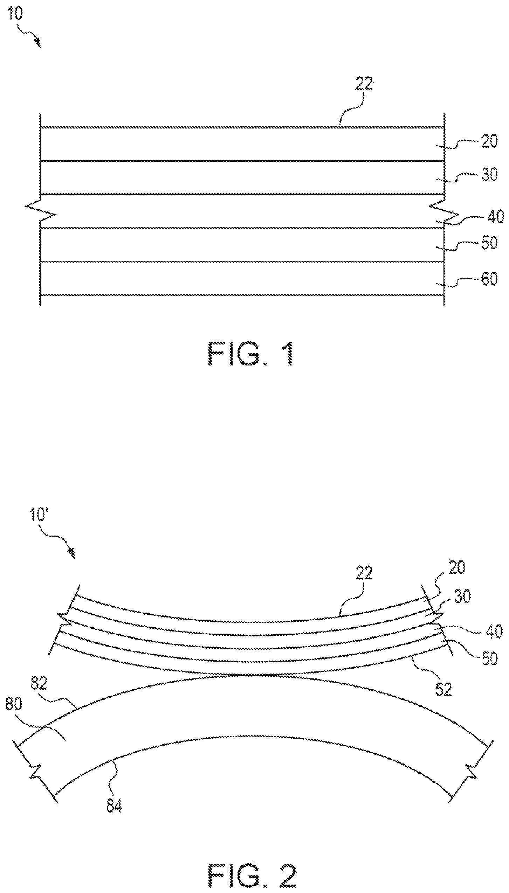

Figure 1 is a schematic cross sectional illustration of a label in accordance with the present subject matter. The label 10 comprises one or more facestock layers 20, one or more regions or layers of print 30, a primer layer 40, and an adhesive layer 50. The label 10 may also comprise one or more liners 60 that cover or are disposed on the adhesive layer 50. Typically, the facestock layer 20 defines a first or an outer face 22 and an oppositely directed second or inner face which is in contact with the print 30. If the label is free of print, the oppositely directed face of the facestock layer 20 is in contact with the primer layer 40. As depicted in Figure 1, the print 30 (if used) is disposed between the facestock layer 20 and the primer layer 40. And, the print 30 (if used) is disposed immediately adjacent to and in contact with the oppositely directed face of the facestock layer 20. The print 30 (if used) is also disposed immediately adjacent to and in contact with the primer layer 40.

Figure 2 is a schematic cross sectional illustration of application of a label 10' to, or removal of a label 10' from, a container 80. The container 80 can be in the form of a glass bottle for example, and defines an outer surface 82, and an oppositely directed inner surface 84. The label 10' (free of any liner such as liner 60 of Figure 1) is as previously described with regard to Figure 1 and defines an adhesive face 52. In application of the label 10' to the outer surface 82 of the container 80, the adhesive face 52 is contacted with the container outer face 82. After application of the label 10' to the container 80, a labeled container results. In removal of the label 10' from the container 80, one or more washing operations are performed to expose the adhesive face 52 to washing fluid and thereby promote debonding or separation of the label 10' from the container 80.

### Methods

The primer compositions, labels using such compositions, and labeled containers are adapted such that when subjected to one or more washing operations such as those typically used to remove labels from reusable containers, the primer composition retains any adhesive used to attach the label to the container.

### Washing

It should be understood that the present subject matter is not limited to any one caustic wash process. Thus, any suitable caustic wash process can be utilized in conjunction with the present subject matter. Such caustic washes include, but are not limited to, NaOH, KOH, LiOH, MgOH, CaOH, or suitable mixtures of two or more thereof. In one embodiment, the concentration of the caustic material in the caustic solution is from about 1% to 10% or less. More specifically, the concentration of the caustic material may be 7% or less, or may be 2.5% or less. Still more specifically, the concentration of the caustic material may be 2.0%. It is envisioned that the density of the caustic wash solution will be different from the densities of both the labeled article and the label in order to facilitate floating and/or sinking of the article and label, depending on the relative densities, as well as the means by which the materials are separated from the caustic solution.

The caustic solution may also contain other agents to aid in the effectiveness of the caustic solution such as Triton X-100. Triton X-100 (C14H22O(C2H4O)n) is a nonionic surfactant which has a hydrophilic polyethylene oxide group (on average it has 9.5 ethylene oxide units) and a hydrocarbon lipophilic or hydrophobic group. The hydrocarbon group is a 4-(1,1,3,3-tetramethylbutyl)-phenyl group. It is related to the Pluronic range of detergents marketed by BASF. The pluronics are triblock copolymers of ethylene oxide and propylene oxide. The part formed from ethylene oxide is more hydrophilic than the part from propylene oxide. Triton X-100 is very viscous at room temperature and is thus easiest to use after being gently warmed.

Individual reclaim/recycling facilities will use a multitude of special additives and processes (such as agitation, air allutriation, mechanical separation, chemical additives, wet grinding, friction washing, pressure washes) during the reclaim process. It is envisioned that a wash temperature range of 75-95° C., more specifically 77-93° C., and still more specifically a fixed temperature of 88° C. be employed to increase the release behavior of the facestock and/or label from the labeled article. It has been found that an agitation speed of 1500 rpm or less, or more specifically 300-1200 rpm, or even more specifically 600-1200 rpm, or still more specifically 900-1200 rpm increases the release behavior of the facestock and/or label from the labeled article. Still further, a wash time range between 1 and 15 minutes, or specifically between 5 and 15 minutes, or more specifically between 10 and 15 minutes, or even more specifically a period of 15 minutes also increases the release behavior of the facestock and/or label from the labeled article. Alternatively, the wash time may last up to 30 minutes, or may last up to an hour. However, the combination of each range of wash temperature, agitation speed, wash time, and caustic material concentration disclosed are contemplated in the facestock and/or label removal methods disclosed herein.

### Applying Labels

In many embodiments, a plurality of labels such as those described herein are provided in a roll or sheet form. The labels can be applied to one or more containers or articles in a batch, continuous, or semi-continuous fashion. Prior to application, one or more liners are removed from the labels to thereby expose the adhesive face of the labels. The adhesive face and label is then contacted with the container(s) or article(s) and the labels applied thereto. Application may also include one or more operations of pressing or otherwise applying a pressing force against the label to promote contact and/or adhesion with the container; activating and/or curing of the adhesive such as by heating and/or exposure to UV light; and/or drying operations.

### Removing Labels

Removal operations include separating a label previously applied to a container or article, from the container. In many embodiments, removal operations also include subjecting the labeled container to one or more washing operations and particularly caustic washing operations. Details of caustic washing are described herein.

As described herein, a significant benefit in using the primer compositions in a label such as used with reusable glass bottles, and in direct contact with adhesive, is that upon subjecting the label to a caustic wash operation such as to remove the label from the underlying glass substrate, at least substantially all of the adhesive remains disposed and/or retained with the label rather than remaining with the glass bottle. The term "at least substantially all" as used in this context refers to at least 95% of the adhesive being retained with the label, in many embodiments at least 98%, in certain embodiments at least 99%, and in particular embodiments at least 99.9% of the adhesive being retained with the label.

Many other benefits will no doubt become apparent from future application and development of this technology.

As described hereinabove, the present subject matter solves many problems associated with previous strategies, systems and/or devices.

## Claims

1. A primer composition for retaining adhesive disposed thereon during a caustic wash operation, the primer composition comprising:
at least one component selected from a polyurethane and a polyurethane acrylate; and
at least one anionic surfactant as surface tension modifier;
wherein the primer composition is in a layer form and an acrylic emulsion adhesive is disposed on the layer of the primer composition, wherein the polyurethane is an aliphatic polyurethane, wherein the polyurethane acrylate is an aliphatic polyurethane acrylate or an aromatic polyurethane acrylate, and
wherein the primer composition is essentially free of any liquid vehicle component.

2. The primer composition of claim 1 wherein the anionic surfactant is dioctyl sodium sulfosuccinate.

3. A label comprising:
at least one facestock layer, the facestock defining a first face and a second oppositely directed face;
an adhesive layer;
a primer layer comprising the primer composition of any one of claims 1-2, disposed between the facestock layer and the adhesive layer, the primer layer being disposed immediately adjacent to and in contact with the adhesive layer.

4. The label of claim 3 further comprising:
print disposed between the facestock layer and the primer layer, preferably immediately adjacent to and in contact with the second face of the facestock layer and/or immediately adjacent to and in contact with the primer layer.

5. The label of any one of claims 3-4 further comprising:
a liner disposed on the adhesive layer.

6. A labeled container comprising:
a container defining an outer surface;
the label of any one of claims 3-4, adhered to the outer surface of the container, the adhesive layer being in contact with the outer surface of the container.

7. The labeled container of claim 6 wherein the outer surface of the container is glass or plastic.

8. A method of applying a label to a container, the method comprising:
providing a container defining an outer surface;
providing the label of any one of claims 3-5;
adhering the adhesive layer of the label to the outer surface of the container to thereby apply the label to the container.

9. The method of claim 8 wherein the outer surface of the container is glass or plastic.

10. The method of any one of claims 8-9 wherein the label further includes the liner disposed on the adhesive layer, the method further comprising:
prior to adhering the adhesive layer, removing the liner from the label.

11. A method of removing a label from a labeled container, the method comprising:
providing the labeled container of any one of claims 6-7;
subjecting the labeled container to at least one washing operation thereby resulting in removal of the label from the container.

12. The method of claim 11 wherein at least 95% of the adhesive of the label is removed with the label.

13. The method of any one of claims 11-12 wherein the washing operation includes contacting the labeled container with a caustic solution, preferably including at least one caustic material at a concentration of from 1% to 10% in the solution, and/or preferably at a temperature within a range of from 75° to 95°C.

## Patentansprüche

1. Primerzusammensetzung zum Zurückbehalten von darauf befindlichem Haftmittel während eines kaustischen Waschvorgangs, wobei die Primerzusammensetzung umfasst:
mindestens eine Komponente, ausgewählt aus einem Polyurethan und einem Polyurethanacrylat; und
mindestens ein anionisches Tensid als Oberflächenspannungsmodifikator;
wobei die Primerzusammensetzung in einer Schichtform vorliegt und ein Acrylemulsionshaftmittel auf der Schicht der Primerzusammensetzung angeordnet ist, wobei das Polyurethan ein aliphatisches Polyurethan ist, wobei das Polyurethanacrylat ein aliphatisches Polyurethanacrylat oder ein aromatisches Polyurethanacrylat ist, und wobei die Primerzusammensetzung im Wesentlichen frei von jeder flüssigen Trägerkomponente ist.

2. Primerzusammensetzung nach Anspruch 1, wobei das anionische Tensid Dioctylnatriumsulfosuccinat ist.

3. Etikett, umfassend:
mindestens eine Deckschicht, wobei die Deckschicht eine erste Fläche und eine zweite, entgegengesetzt gerichtete Fläche definiert;
eine Haftmittelschicht;
eine Primerschicht, die die Primerzusammensetzung nach einem der Ansprüche 1 bis 3 enthält und zwischen der Deckschicht und der Haftmittelschicht angeordnet ist, wobei die Primerschicht unmittelbar angrenzend an und in Kontakt mit der Haftmittelschicht angeordnet ist.

4. Etikett nach Anspruch 3, weiter umfassend:
Aufdruck, der zwischen der Deckschicht und der Primerschicht angeordnet ist, vorzugsweise unmittelbar benachbart zu und in Kontakt mit der zweiten Fläche der Deckschicht und/oder unmittelbar angrenzend an und in Kontakt mit der Primerschicht.

5. Etikett nach einem der Ansprüche 3 bis 4, weiter umfassend:
ein auf der Haftmittelschicht angeordnetes Trägermaterial.

6. Etikettierter Behälter, umfassend:
einen Behälter mit einer Außenfläche;
das Etikett nach einem der Ansprüche 3 bis 4, haftend an der Außenfläche des Behälters, wobei die Haftmittelschicht in Kontakt mit der Außenfläche des Behälters steht.

7. Etikettierter Behälter nach Anspruch 6, wobei die Außenfläche des Behälters aus Glas oder Kunststoff besteht.

8. Verfahren zum Anbringen eines Etiketts auf einen Behälter, wobei das Verfahren umfasst:
Bereitstellen eines Behälters, der eine Außenfläche aufweist;
Bereitstellen des Etiketts nach einem der Ansprüche 3-5;
Anhaften der Haftmittelschicht des Etiketts an der Außenfläche des Behälters, um dadurch das Etikett auf dem Behälter anzubringen.

9. Verfahren nach Anspruch 8, wobei die Außenfläche des Behälters aus Glas oder Kunststoff besteht.

10. Verfahren nach einem der Ansprüche 8 bis 9, bei dem das Etikett weiter das auf der Haftmittelschicht angeordnete Trägermaterial enthält, wobei das Verfahren weiter umfasst:
Entfernen des Trägermaterials von dem Etikett vor dem Anhaften der Haftmittelschicht.

11. Verfahren zum Entfernen eines Etiketts von einem etikettierten Behälter, wobei das Verfahren umfasst:
Bereitstellen des etikettierten Behälters nach einem der Ansprüche 6-7;
Unterziehen des etikettierten Behälters mindestens einem Waschvorgang, wodurch das Etikett von dem Behälter entfernt wird.

12. Verfahren nach Anspruch 11, wobei mindestens 95 % des Haftmittels des Etiketts mit dem Etikett entfernt werden.

13. Verfahren nach einem der Ansprüche 11 bis 12, wobei der Waschvorgang das Inkontaktbringen des etikettierten Behälters mit einer kaustischen Lösung einschließt, die vorzugsweise mindestens ein kaustisches Material in einer Konzentration von 1 % bis 10 % in der Lösung und/oder vorzugsweise bei einer Temperatur innerhalb eines Bereichs von 75° bis 95°C enthält.

## Revendications

1. Composition de primaire pour retenir un adhésif disposé sur elle au cours d'une opération de lavage caustique, la composition de primaire comprenant :
au moins un composant sélectionné parmi un polyuréthane et un acrylate de polyuréthane ; et
au moins un tensioactif anionique en tant que modificateur de tension superficielle ;
dans laquelle la composition de primaire est sous une forme de couche et un adhésif à base d'émulsion acrylique est disposé sur la couche de la composition de primaire, dans laquelle le polyuréthane est un polyuréthane aliphatique, dans laquelle l'acrylate de polyuréthane est un acrylate de polyuréthane aliphatique ou un acrylate de polyuréthane aromatique, et
dans laquelle la composition de primaire est essentiellement exempte de tout composant d'excipient liquide.

2. Composition de primaire selon la revendication 1, dans laquelle le tensioactif anionique est le sulfosuccinate dioctylique de sodium.

3. Étiquette comprenant :
au moins une couche de pellicule frontale, la pellicule frontale définissant une première face et une seconde face dirigée de manière opposée ;
une couche adhésive ;
une couche de primaire comprenant la composition de primaire selon l'une quelconque des revendications 1 et 2, disposée entre la couche de pellicule frontale et la couche adhésive, la couche de primaire étant disposée de manière immédiatement adjacente à et en contact avec la couche adhésive.

4. Étiquette selon la revendication 3, comprenant en outre :
une impression disposée entre la couche de pellicule frontale et la couche de primaire, de préférence de manière immédiatement adjacente à et en contact avec la seconde face de la couche de pellicule frontale et/ou de manière immédiatement adjacente à et en contact avec la couche de primaire.

5. Étiquette selon l'une quelconque des revendications 3 et 4, comprenant en outre :
une doublure disposée sur la couche adhésive.

6. Récipient étiqueté comprenant :
un récipient définissant une surface externe ;
l'étiquette selon l'une quelconque des revendications 3 et 4, collée à la surface externe du récipient, la couche adhésive étant en contact avec la surface externe du récipient.

7. Récipient étiqueté selon la revendication 6, dans lequel la surface externe du récipient est du verre ou du plastique.

8. Procédé d'application d'une étiquette à un récipient, le procédé comprenant :
fournir un récipient définissant une surface externe ;
fournir l'étiquette selon l'une quelconque des revendications 3 à 5 ;
coller la couche adhésive de l'étiquette à la surface externe du récipient pour appliquer de ce fait l'étiquette au récipient.

9. Procédé selon la revendication 8, dans lequel la surface externe du récipient est du verre ou du plastique.

10. Procédé selon l'une quelconque des revendications 8 et 9, dans lequel l'étiquette inclut en outre la doublure disposée sur la couche adhésive, le procédé comprenant en outre :
avant de coller la couche adhésive, retirer la doublure de l'étiquette.

11. Procédé de retrait d'une étiquette d'un récipient étiqueté, le procédé comprenant :
fournir le récipient étiqueté selon l'une quelconque des revendications 6 et 7 ;
soumettre le récipient étiqueté à au moins une opération de lavage, résultant de ce fait en le retrait de l'étiquette du récipient.

12. Procédé selon la revendication 11, dans lequel au moins 95 % de l'adhésif de l'étiquette est retiré avec l'étiquette.

13. Procédé selon l'une quelconque des revendications 11 et 12, dans lequel l'opération de lavage inclut mettre en contact le récipient étiqueté avec une solution caustique, de préférence incluant au moins une matière caustique à une concentration allant de 1 % à 10 % dans la solution, et/ou de préférence à une température au sein d'une plage allant de 75° à 95°C.
